Europäisches Patentamt

European Patent Office

Office européen des brevets

(19)

(11) Numéro de publication: **0 077 243**
A1

(12) # DEMANDE DE BREVET EUROPEEN

(21) Numéro de dépôt: **82401773.5**

(22) Date de dépôt: **30.09.82**

(51) Int. Cl.³: **G 05 B 19/42**

---

(30) Priorité: **09.10.81 FR 8119015**

(43) Date de publication de la demande: **20.04.83**
Bulletin **83/16**

(84) Etats contractants désignés: **CH DE FR GB IT LI**

(71) Demandeur: **Etablissements LEMOINE & Cie, 34, rue du Dragon, F-75006 Paris (FR)**

(72) Inventeur: **Pouyet, Jean, 15, rue Lepoutre, F-94130 Nogent sur Marne (FR)**

(74) Mandataire: **Barbin le Bourhis, Joel, Societe Internationale 19, rue de la Paix, F-75002 Paris (FR)**

---

(54) **Procédé de saisie de données représentatives de la forme d'un objet.**

(57) Procédé de palpage de la forme d'un objet en vue de la reproduction de cet objet par usinage.

Selon l'invention, on recherche des positions de contact entre le palpeur et l'objet définissant des pôles (A, D, G, J, M) dont les coordonnées sont mémorisées et on interpole le contour ($K_2$) représentatif de la forme de l'objet par une succession d'arcs de cercle ($K_3$) passant par certains de ces pôles et dont les rayons sont voisins des rayons de courbure de portions correspondantes dudit contour; la reproduction ultérieure du modèle se faisant ainsi à partir d'une succession de coordonnées de pôles et d'une succession d'équations d'arcs de cercle.

L'invention se prête aussi à une procédure d'élimination de pôles inutiles, compte tenu de la précision d'usinage recherchée.

0077243

PROCEDE DE SAISIE DE DONNEES REPRESENTATIVES
DE LA FORME D'UN OBJET

L'invention concerne un procédé de saisie de données représentatives de la forme d'un objet par repérage des cotes d'un certain nombre de contours dudit objet, lesquels contours sont déterminés par les plans fictifs parallèles successifs dans lesquels un palpeur est assujetti à se déplacer.

Pour la reproduction de pièces complexes à partir d'une machine-outil, on utilise souvent la technique du copiage qui consiste à relever les cotes d'un modèle au moyen d'un palpeur et à utiliser ces données pour commander le mouvement de l'outil. Le copiage peut être fait en temps réel, c'est-à-dire en pilotant l'outil en même temps que le palpeur explore le modèle, si l'exploration se fait en un temps compatible avec celui qui est nécessaire pour l'usinage. On peut aussi procéder par enregistrement sur support magnétique ou bande perforée de ces données, une fois pour toutes et lire cette mémoire chaque fois que l'on désire réaliser une copie du modèle. Ce processus en temps différé est plus souple de mise en oeuvre dans la mesure où la vitesse de lecture des informations contenues sur la bande peut être adaptée au temps d'usinage. Un problème constant que l'on rencontre dans la mise en oeuvre dans ce genre de procédé est d'obtenir un bon compromis entre la précision du copiage et sa rapidité.

On connaît des systèmes où le palpage s'effectue en maintenant un contact permanent entre le modèle et le palpeur et en enregistrant à des intervalles de temps donnés les coordonnées du palpeur. La précision de ce type de palpage est limitée par la déflexion du palpeur et par la qualité des asservissements de position des deux moteurs commandant les mouvements de la table X-Y portant le palpeur ou le modèle. Dans un passé plus récent, on a recherché au contraire à réaliser un palpage constitué par une succession de contacts entre le palpeur et l'objet-modèle, ledit palpeur explorant un plan de coupe fictif de l'objet en s'éloignant et en se rapprochant successivement de l'objet tout en recherchant des positions pour lesquelles il y a contact entre le palpeur et l'objet. La précision et la rapidité sont fonction du pas d'exploration du palpeur. Pour avoir une bonne précision, un faible pas est nécessaire, mais le temps d'exploration est d'autant plus long que le pas est faible. Quel que soit le mode de palpage, la mémorisation des informations représentatives du contour se fait généralement en mémorisant des coordonnées représentatives d'un certain nombre de points de contact entre palpeur et modèle (et plus particulièrement les coordonnées du centre de l'extrémité du palpeur lorsque le contact s'établit) et en choisissant une interpolation linéaire entre les points (on utilisera plus loin le mot pôle pour désigner de tels points) représentés par ces coordonnées. Le contour de l'objet-modèle est considéré comme reproduit par une ligne brisée joignant les points du plan fictif de coupe dont les coordonnées correspondent au contact entre le palpeur et l'objet-modèle.

La présente invention se rapporte à un système de palpage perfectionné, à la fois plus précis et plus rapide en raison de plusieurs particularités originales, à savoir :

- Un nouveau mode d'interpolation de la courbe passant par les pôles retenus, pour améliorer la précision du copiage.

- Un nouveau mode d'exploration du plan d'un contour donné, remarquable par une progression tangentielle du palpeur par rapport audit contour.

- Un nouveau mode d'élimination de pôles inutiles, dans le but de ne mémoriser qu'un nombre restreint de pôles permettant, avec l'interpolation choisie, de définir ultérieurement une trajectoire de l'outil de reproduction dans les limites d'une tolérance prédéterminée.

Plus précisément, l'invention concerne donc un procédé de saisie de données représentatives de la forme d'un objet, notamment en vue de la détermination de la trajectoire d'un outil pour la reproduction dudit objet, consistant à mémoriser une succession de coordonnées représentatives d'une succession de points de contact entre un palpeur et ledit objet, ces coordonnées définissant des pôles et étant déterminées par rapport à un système de repérage de référence, caractérisé en ce qu'on associe à une succession donnée de pôles une succession d'arcs de cercle dont les rayons sont voisins des rayons de courbure de portions successives d'une courbe dudit plan représentant la trajectoire dudit palpeur supposé en contact permanent avec ledit objet.

Dans la majorité des cas, la progression du palpeur ou de l'objet après chaque contact est caractérisée par un cycle consistant à :

- éloigner ledit palpeur dudit objet, suivant une direction perpendiculaire au segment de droite joignant les deux pôles précédents,

- déplacer ledit palpeur ou ledit objet après lui avoir donné un premier changement d'orientation de $-\frac{\pi}{2}$ (respectivement $+\frac{\pi}{2}$, (ce déplacement étant appelé avance tangentielle),

- déplacer ledit palpeur ou ledit objet après lui avoir donné un second changement d'orientation de $-\frac{\pi}{2}$ (respectivement $+\frac{\pi}{2}$) jusqu'à rechercher un nouveau contact éventuel, et

- prendre en compte, au moins provisoirement, les coordonnées d'un nouveau pôle dans un système de repérage de référence.

L'invention sera mieux comprise et d'autres avantages de celle-ci apparaîtront mieux à la lumière de la description qui va suivre d'un appareillage susceptible d'exécuter le procédé de l'invention et de ce procédé lui-même pour l'exploration du contour d'un objet-modèle par ledit appareillage, faite en référence aux dessins annexés dans lesquels :

- la figure 1 représente schématiquement les éléments essentiels d'un appareillage conforme à l'invention ;

- la figure 2 illustre le mode de progression normal du palpeur le long du contour de l'objet-modèle ;

- la figure 3 illustre l'interpolation circulaire choisie et un processus d'élimination de pôles inutiles ;

- la figure 4 illustre le comportement du palpeur dans le cas où le mode de progression illustré à la figure 2 doit être provisoirement abandonné;et

- les figs 5 à 8 illustrent la détermination automatique d'un changement de plan de l'extrémité du palpeur suivant une direction d'un système d'axes orthonormé pour le palpage de contours successifs de l'objet modèle.

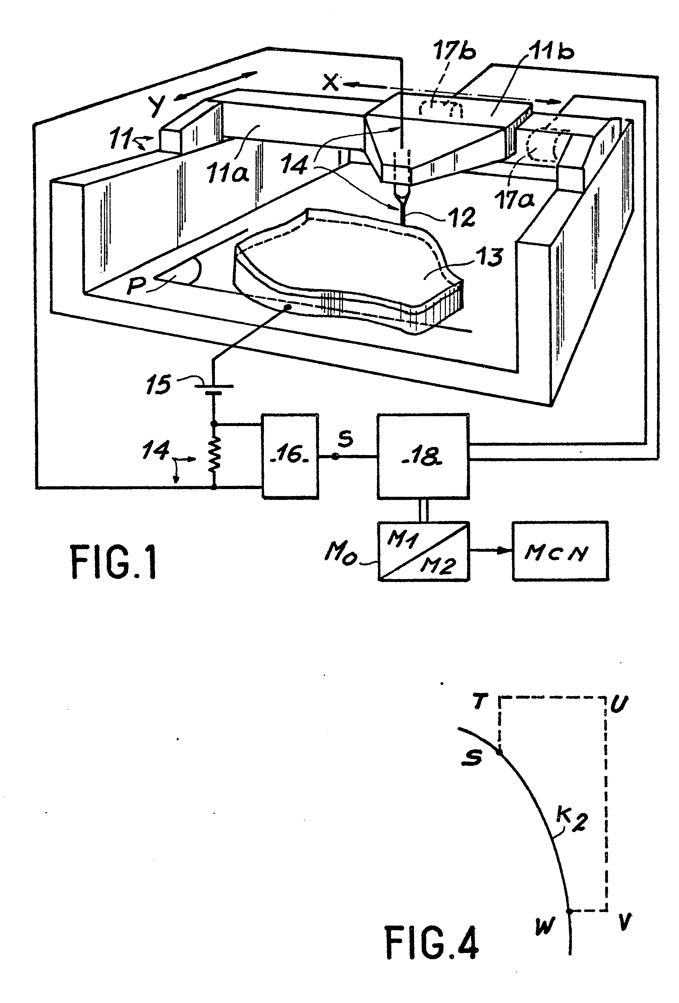

En se reportant plus particulièrement à la figure 1, on voit que la mise en oeuvre du procédé de l'invention suppose un système de déplacement du type X-Y,11, sur lequel est fixé le palpeur 12. Le système de déplacement X-Y est à progression pas-à-pas suivant les deux directions orthonormées d'un plan P dans lequel se déplace l'extrémité du palpeur 12, en suivant le contour dudit objet suivant le processus qui sera décrit plus loin. Dans cet exemple, on a montré un palpeur sur un système de déplacement 11 et l'objet posé en regard sur un support fixe, mais il est clair qu'il est strictement équivalent de rendre l'objet 13 solidaire du système de déplacement 11 et d'utiliser un palpeur fixe. Une telle variante tombe évidemment dans le cadre de l'invention. Le palpeur 12 est d'une structure très simple. Il s'agit d'une tige conductrice de l'électricité. Sa partie extrême est flexible et a de préférence le même diamètre et la même forme que l'outil de reproduction avec lequel on envisage d'usiner les copies. Dans une autre variante non représentée, où le palpeur 12 serait assujetti à se déplacer verticalement, la structure du palpeur pourrait être légèrement différente et, en particulier, comporter une partie rétractable axialement. L'objet 13 est conducteur de l'électricité (il peut être métallique ou métallisé en surface) de sorte qu'on peut l'inclure dans un circuit électrique de mesure 14 comprenant aussi le palpeur 12. Ce circuit 14 est banal puisque sa seule fonction est d'avoir deux états caractéristiques différents (présence d'un courant ou non dans le circuit) selon que le capteur est ou non en contact avec l'objet-modèle 13. Ainsi, une source de tension 15 débitera dans un circuit 14 lorsqu'il y aura un contact et un détecteur 16 branché en dérivation délivrera une sortie logique S adressée à une entrée d'un calculateur 18. Le système de déplacement 11 comporte un premier chariot transversal 11a se déplaçant suivant une direction Y du repère orthonormé et un second chariot longitudinal 11b se déplaçant le long du chariot 11a suivant la direction X du repère orthonormé. Chaque chariot 11a, 11b, porte un moteur électrique du type pas-à-pas 17a, 17b, respectivement, qui commande son déplacement. Ces moteurs sont pilotés par le calculateur 18 recevant les informations représentatives du contact entre le palpeur 12 et l'objet-modèle 13 et programmé pour effecteur un certain nombre d'opérations susceptibles d'aboutir à la mise en oeuvre du procédé qui sera décrit ci-dessous. Le calculateur est couplé à une mémoire $M_0$ elle-même partagée en une mémoire de calcul $M_1$ où sont stockées toutes les informations nécessaires pour assurer le déplacement du palpeur et vérifier au fur et à mesure la précision du relevé des cotes de l'objet-modèle et une mémoire de résultats $M_2$ (éventuellement des moyens d'enregistrement magnétique) où sont stockées définitivement les informations destinées à devenir les données de pilotage d'une machine-outil à commande numérique (MCN) conventionnelle. Il est à noter que la démultiplication de la transmission de mouvement entre les moteurs 17a et 17b et les chariots 11a et 11b est relativement importante de sorte qu'une rotation élémentaire de l'un des moteurs ne se traduit que par un déplacement élémentaire de quelques microns suivant la direction X ou Y correspondante. On conçoit donc que le plan P se trouve fictivement quadrillé de façon extrêmement fine, chaque point du quadrillage étant une position possible du palpeur. En revanche, comme les parcours les plus faibles qui sont imposés au palpeur 12 par le calculateur 18 sont plus importants (de l'ordre de quelques dixièmes de millimètre) et que les deux moteurs sont commandés en même temps, tout se passe comme si l'extrémité du palpeur pouvait se déplacer suivant des segments de droite quelconques du plan P, à l'échelle macroscopique de l'objet-modèle. Il n'en reste pas moins vrai que chaque fois que le calculateur 18 retient "à la volée" un point de contact entre le palpeur et le modèle, il lui attribue les coordonnées du point du quadrillage X-Y le plus proche, de sorte que la précision est de l'ordre de grandeur de ce quadrillage, c'est-à-dire quelques microns. En effet, lorsque le palpeur entre en contact avec le contour de l'objet-modèle, les coordonnées du centre de l'extrémité du palpeur sont prises en compte par le calculateur 18 comme étant celles d'un pôle recherché.Dès que le contact s'établit,les moteurs 17a et 17b sont freinés de sorte que le palpeur s'arrête un peu plus loin sur la même trajectoire. La flexibilité du palpeur permet ce décalage entre sa position réelle et la position de son extrémité libre qui reste en contact avec le contour de l'objet modèle. A chaque instant la position du palpeur peut être déterminée avec précision dans le système de repérage de référence par utilisation de règles optiques(connues en soi et disponibles dans le commerce) disposées suivant les axes dudit repère, ou par la détection et le comptage des pas des moteurs.On notera aussi que le système de déplacement X-Y peut être principalement constitué par une machine-outil à commande numérique, disponible déjà dans de nombreuses entreprises, en modifiant et/ou complétant les moyens de pilotage de cette dernière, à peu de frais. Eventuellement, une machine peut être utilisée pour assurer le déplacement du palpeur et une autre machine, couplée à la première, peut être utilisée normalement pour l'usinage.D'autres types de palpeurs que celui qui est décrit ci-dessus peuvent être utilisés.Par exemple, au lieu de rechercher une conduction électrique directe entre le palpeur et l'objet-modèle, ce qui impose que ce dernier soit conducteur, on peut utiliser des palpeurs de précision disponibles dans le commerce et comportant un contacteur électrique auxiliaire actionné par la flexion ou la compression du palpeur au moment de son contact avec l'objet-modèle.

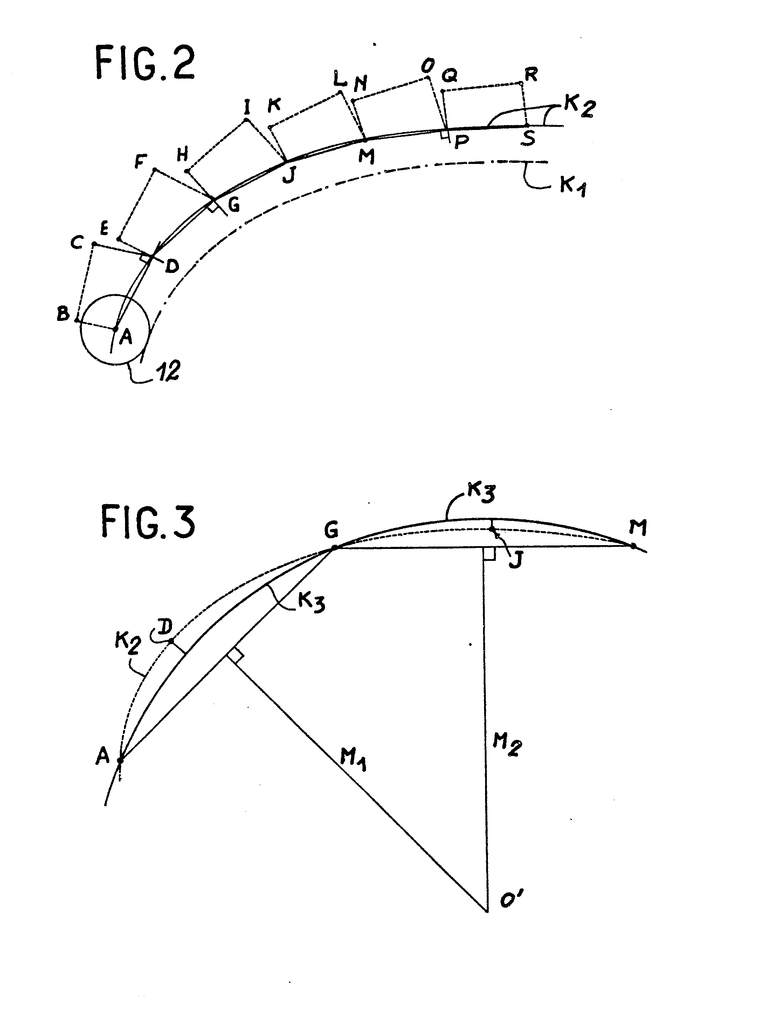

On va maintenant décrire, en référence à la fig. 2, le mode de progression habituel du palpeur 12 le long du contour $K_1$ de l'objet-modèle 13. Si on suppose que l'extrémité libre du palpeur est cylindrique, la courbe $K_1$ est toute entière dans le plan de déplacement de cette extrémité. La courbe $K_2$ est le lieu géométrique des centres des cercles ayant le même diamètre que le palpeur et tangents au contour $K_1$.Par conséquent, les positions successives du centre de l'extrémité du palpeur aux moments précis où le contact s'établit entre palpeur et modèle sont toutes situées sur la courbe $K_2$.On peut considérer que les positions successives réelles du centre du palpeur sur la courbe $K_2$ sont les pôles recherchés, sachant que le palpeur et l'outil de reproduction auront de préférence les mêmes dimensions.Si ce n'était pas le cas,la trajectoire de l'outil de reproduction serait une courbe parallèle à celle qui sera définie à partir du traitement des pôles qui sera décrit plus loin et dépendrait essentiellement de la différence de diamètre entre l'outil et le palpeur.La progression du palpeur est illustrée par une succession de segments de droite AB-BC-CD-DE-EF-GH-HI,etc.. Les lettres qui se succèdent par ordre alphabétique marquent,chaque fois, un changement d'orientation du déplacement du palpeur.Les pôles provisoirement pris en compte sont A, D, G, J, M, P, S, etc.. Le passage d'un pôle à un autre s'effectue selon le cycle mentionné plus haut, à savoir :

1) En supposant que le palpeur soit en contact avec l'objet-modèle après la détermination d'un pôle,le calculateur commande les moteurs 17a et 17b pour éloigner le palpeur de l'objet-modèle 13 suivant une direction perpendiculaire au segment de droite joignant le pôle qui vient d'être déterminé au précédent.La longueur de ce déplacement est une constante fixée à l'avance par l'opérateur,elle doit être suffisante pour permettre la rupture du contact entre l'extrémité du palpeur et le contour $K_1$,ce qui dépend de la qualité du freinage des moteurs,après l'établissement d'un contact.Ainsi,en référence à la fig. 2, le segment DE est perpendiculaire à la corde AD, GH est perpendiculaire à la corde DG, JK est perpendiculaire à la corde GJ, etc..

2) Le calculateur commande ensuite le déplacement du palpeur suivant un segment de droite après lui avoir donné un premier changement d'orientation de $-\frac{\pi}{2}$ (ou $+\frac{\pi}{2}$ si le palpeur progresse dans l'autre sens).La longueur de ce déplacement appelé "avance tangentielle"puisqu'il correspond au déplacement du palpeur le long de la courbe $K_2$, est une autre constante fixée à l'avance par l'opérateur.Dans la pratique, elle est souvent le double du déplacement précédent.En référence à la fig.2, ces déplacements sont représentés par les segments BC, EF, HI, KL, NO,etc... Les changements d'orientation en B, E, F, K, etc.. sont ici égaux à $-\frac{\pi}{2}$.

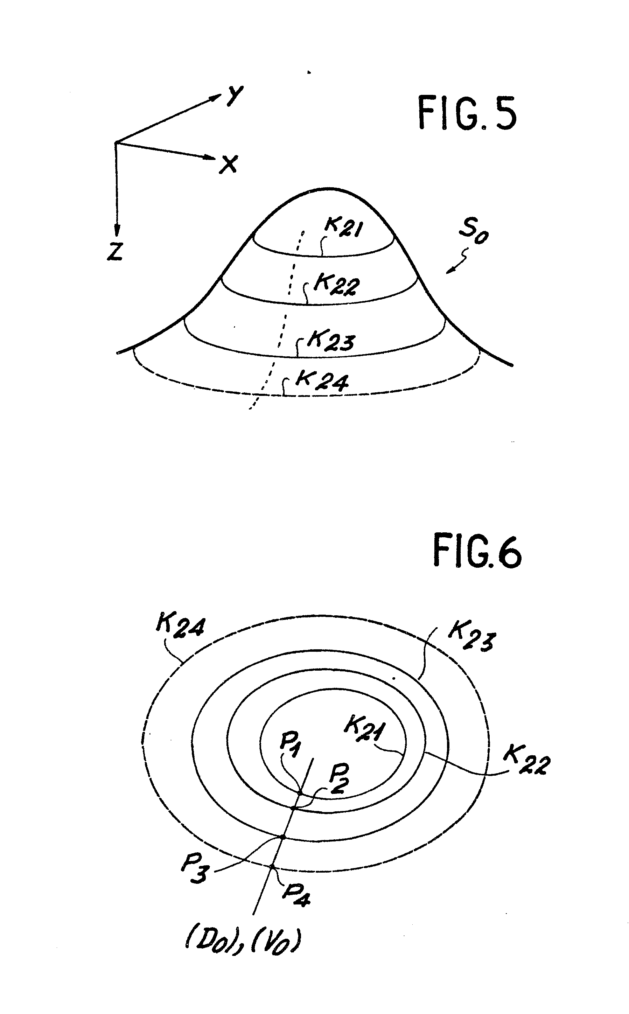

3) Le calculateur 18 commande ensuite les moteurs 17a et 17b pour déplacer à nouveau le palpeur après lui avoir fait subir un second changement d'orientation de $-\frac{\pi}{2}$, jusqu'à rechercher un nouveau contact éventuel.Dès que ce nouveau contact est détecté, les coordonnées du centre de l'extrémité du palpeur(sur la courbe $K_2$)sont mises en mémoire en tant que nouveau pôle et le palpeur est freiné dans sa trajectoire.Il s'arrête à peu de distance du nouveau pôle ce qui est possible grâce à son élasticité propre.En référence à la fig.2, ces trajets de longueur variable du palpeur sont représentés par les segments CD, FG, IJ, LM, OP, RS,etc.. Les changements d'orientation aux points C,F,I,L,O,R sont ici égaux à $-\frac{\pi}{2}$. Lorsque la longueur de l'un des segments dépasse une valeur prédéterminée sans qu'il y ait eu contact entre le palpeur et l'objet-modèle,un mode de progression particulier du palpeur est mis en oeuvre,lequel sera expliqué plus loin en référence à la fig. 4.

Une caractéristique importante de l'invention réside dans le fait qu'on associe à une succession donnée de pôles une succession d'arcs de cercle dont les rayons sont voisins des rayons de courbure de portions successives de la courbe $K_2$. Cette interpolation circulaire donne une approximation beaucoup plus précise du contour réel que l'interpolation linéaire utilisée habituellement. En outre, de nombreuses machines d'usinage à commande numérique sont proposées dans le commerce avec des moyens de programmation et de commande pour faire exécuter à l'outil de coupe des trajets circulaires connaissant le centre du cercle, son rayon et les deux points limites de l'arc de cercle voulu. Le mode d'interpolation retenu est donc compatible avec ce type de machine, sans interface coûteuse.

Selon un mode de réalisation possible, la mémoire $M_2$ recevra non seulement les coordonnées de ces pôles mais éventuellement les paramètres (par exemple les coordonnées du centre et la longueur du rayon) de cercles passant par certains de ces pôles. Cependant, si on dispose de moyens de calcul suffisamment rapides, il est parfaitement possible de se contenter de stocker uniquement les coordonnées des pôles, le calcul des éléments d'interpolation circulaire étant alors fait à chaque usinage, à partir de la succession des coordonnées desdits pôles.

Plusieurs méthodes d'interpolation circulaires sont possibles. Par exemple, on peut réaliser l'interpolation circulaire en associant à la portion de la courbe $K_2$ limitée par deux pôles consécutifs, par exemple D et G, la portion du cercle passant par ces deux pôles et le pôle A précédent. On peut aussi lui associer la portion du cercle passant par ces deux pôles et le pôle J suivant. Un autre choix consiste à associer à l'intervalle DG de la courbe $K_2$, la portion d'un cercle passant par ces deux pôles et ayant pour rayon la demi-somme des rayons du cercle passant par ces deux pôles et le pôle précédent (c'est-à-dire A) et du cercle passant par ces mêmes deux pôles et le pôle suivant (c'est-à-dire J). Dans ce dernier cas, l'erreur est divisée par deux, par rapport aux deux autres méthodes d'interpolation circulaire mentionnées ci-dessus.

Si l'avance tangentielle choisie est relativement faible compte tenu du rayon de courbure minimum du contour $K_1$, on peut se contenter d'associer à une succession de trois pôles voisins l'arc du cercle passant par ces trois pôles et limité par les deux pôles extrêmes. C'est ce type d'interpolation qui est utilisée dans le processus d'élimination de pôles inutiles qui va maintenant être décrit en référence à la figure 3. Il est bien entendu, cependant, que ce mode d'élimination de pôles inutiles qui permet de réduire les informations définitivement enregistrées sur une bande magnétique ou une bande perforée peut être mis en oeuvre avec un autre type d'interpolation circulaire et quelle que soit la façon dont on a déterminé les pôles provisoires.

La condition initiale de mise en oeuvre du processus d'identification de la courbe $K_2$ et de réduction du nombre de pôles est que le cercle passant par les trois premiers d'une succession donnée de pôles (A, D, G) puisse être assimilé au tronçon correspondant de la courbe $K_2$, dans les limites de précision requises. Le pôle A est appelé pôle de départ.

Le processus est alors le suivant :

On sélectionne trois pôles non consécutifs, par exemple A, G et M. De préférence, le second pôle G sera toujours séparé du premier et du troisième par un nombre égal de pôles (D et J, respectivement, dans le cas présent) ; ces derniers pôles seront appelés pôles intermédiaires. On calcule les paramètres du cercle $K_3$ passant par les trois pôles sélectionnés. Soit donc l'arc de cercle AGM défini par les coordonnées de son centre O' et par son rayon O'A (figure 3). Ces deux paramètres peuvent être aisément calculés en temps réel car ils ne nécessitent que le traitement d'équations du premier degré.On peut en effet obtenir les coordonnées de O' en déterminant les équations des deux médiatrices M1 et M2 des deux cordes AG et GM menées entre chaque pôle extrême sélectionné (A,M) et le pôle médian sélectionné (G) puis en déterminant l'intersection de ces deux médiatrices M1 et M2. Le rayon du cercle est ensuite simplement donné par la distance O'A (ou O'G ou O'M).

On vérifie ensuite que la distance entre l'arc de cercle AGM et chacun des pôles intermédiaires D et J est inférieure à une valeur de précision choisie. Dans l'affirmative, on sélectionne trois autres pôles non consécutifs, plus éloignés les uns des autres, le pôle de départ étant conservé et on recommence les deux opérations précédentes de détermination des paramètres d'un nouveau cercle et de comparaison de la distance séparant chaque pôle intermédiaire correspondant, de ce cercle. Ainsi, en référence à la figure 2, les trois pôles sélectionnés à la deuxième séquence pourraient être A, J, S, le pôle J étant à nouveau séparé de chaque pôle extrême A ou S par deux pôles intermédiaires, respectivement D, G et M, P.

Ces séquences sont répétées en englobant à chaque fois un plus grand nombre de pôles jusqu'à ce que, pour une séquence donnée, la distance d'au moins l'un des pôles intermédiaires au cercle calculé en dernier lieu dépasse la valeur de précision choisie. Lorsque cet événement se produit, cela signifie qu'on ne peut (compte tenu de la précision voulue) faire l'approximation d'une portion de la courbe $K_2$ par un cercle passant par

9.

ces trois pôles de la courbe.Il suffit de revenir à la situation immédiatement antérieure pour laquelle cette condition était encore vérifiée et par conséquent d'éliminer définitivement tous les pôles intermédiaires compris entre le pôle de départ (A) et le troisième pôle sélectionné de l'avant-dernière sélection. Ce troisième pôle sélectionné est alors considéré comme nouveau pôle de départ et le processus recommence jusqu'à épuisement de tous les pôles provisoirement définis sur la courbe $K_2$ au cours du palpage.

Comme mentionné précédemment, la mémorisation définitive dans la mémoire $M_2$ peut se faire de différentes manières. Par exemple, lorsqu'on a identifié l'avant-dernière sélection de pôle, on peut se contenter de mémoriser définitivement les coordonnées de ces trois pôles. Dans ce cas, les paramètres du cercle correspondant seront déterminés à chaque fois et en temps réel,au moment de l'usinage de reproduction du modèle. Cependant, comme les paramètres de ce cercle ont de toute façon été calculés pour l'élimination des pôles intermédiaires, il est parfaitement possible de mémoriser définitivement, d'une part les paramètres de ce cercle et d'autre part les coordonnées des deux pôles extrêmes de l'avant-dernière sélection, la mémorisation du pôle médian sélectionné n'étant alors d'aucune utilité.

La détermination de la distance d'un pôle intermédiaire à un cercle peut se faire, moyennant un temps de calcul très court, en calculant la différence entre la distance de ce pôle au centre du cercle considéré et le rayon de ce cercle. Par exemple, en référence à la figure 3, la distance du pôle D à l'arc de cercle AGM est égale à O'D moins O'A et la distance du pôle J à l'arc de cercle AGM est égale à O'J moins O'A.

Les sélections successives des trois pôles, de plus en plus éloignés les uns des autres, à partir d'un même pôle de départ, peuvent définir une progression arithmétique. Ainsi, pour une telle progression, l'ordre des pôles étant représenté par l'ensemble des nombres entiers positifs, les triplets de pôles sélectionnés successivement pourront être : (1, 2, 3) - (1, 3, 5) - (1, 4, 7) - (1, 5, 9), etc...

Autrement dit, connaissant un triplet (1, n, m) le triplet suivant pourra être (1, n+1, m+2) ou tout autre type de progression arithmétique prédéterminée.

Pour plus de rapidité, dans le cas notamment où un grand nombre de pôles sont à éliminer, on peut prévoir que les sélections successives des trois pôles à partir d'un même pôle de départ, définissent une progression géométrique. Pour une telle progression, les triplets de pôle sélectionnés successivement pourraient être :

(1, 2, 3) - (1, 3, 5) - (1, 5, 9) - (1, 9, 17), etc...

Autrement dit, connaissant un triplet (1, n, m), le triplet suivant pourrait être (1, 2n-1, 2m-1) ou tout autre type de progression géométrique prédéterminée.

Pour faciliter la compréhension on a supposé que le palpeur était cylindrique. Il apparaît clairement que, du fait que le palpeur doit de préférence avoir la même forme et les mêmes dimensions que l'outil de reproduction qui sera utilisé ultérieurement, ce palpeur aura le plus souvent une extrémité hémisphérique. Ceci ne change rien, ni au mode de progression du palpeur, ni au processus d'élimination des pôles. La seule différence réside dans le fait que la courbe $K_1$ représentant le lieu des points de contact entre le palpeur et le modèle n'est pas forcément plane, ce qui ne change rien au moment de la recopie puisque le point de contact de l'outil avec la pièce suivra exactement le même trajet.

La figure 4 illustre un mode de progression particulier du palpeur. Selon cette variante, on compare l'amplitude du déplacement UV après le second changement d'orientation à l'amplitude de l'avance tangentielle TU tant que le contact entre le palpeur et la courbe $K_2$ ne se produit pas. Lorsque le rapport entre ces deux amplitudes atteint une valeur prédéterminée, par exemple 2, le calculateur est programmé pour donner un troisième changement d'orientation de $-\frac{\pi}{2}$ au palpeur. Celui-ci se déplace donc à partir de V dans cette nouvelle direction jusqu'à la détermination d'un nouveau pôle W.

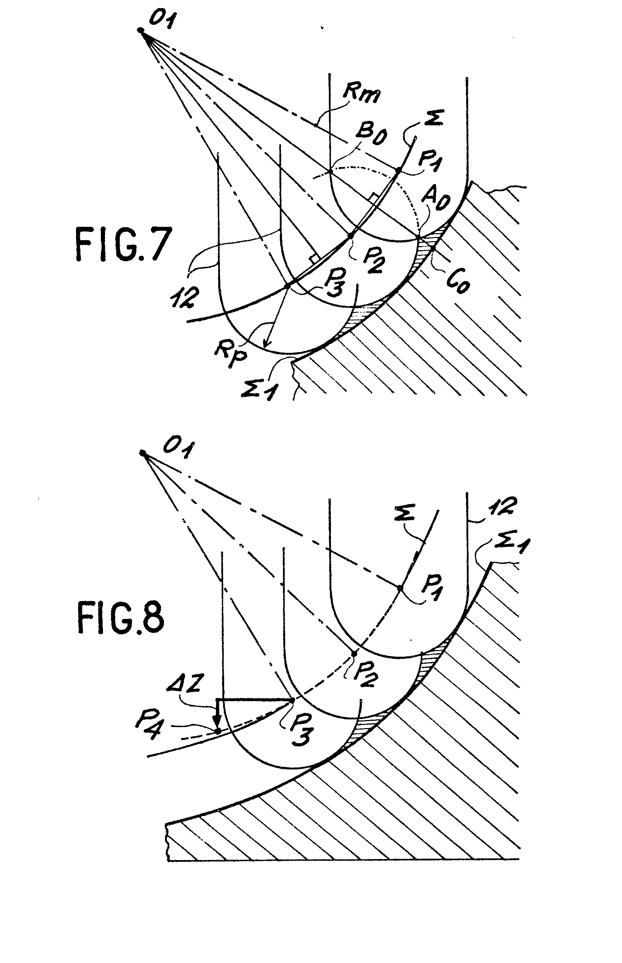

Tout ce qui a été décrit jusqu'à présent illustre l'évolution de l'extrémité du palpeur dans un même plan, ainsi que la saisie et le traitement des données qui en résultent. On va expliciter maintenant comment on peut changer automatiquement le plan d'exploration dans lequel évolue ladite extrémité, en vue de mémoriser les pôles d'une succession de contours correspondants de l'objet-modèle, la distance entre les plans d' exploration successifs (parallèles entre eux et décalés suivant une direction du système de repérage de référence, par exemple une direction perpendiculaire au plan P de la figure 1) étant rendue variable en fonction de la courbure de l'objet d'une part et d'une valeur de précision choisie d'autre part. La mise en oeuvre de ce processus suppose bien entendu que l'appareillage de la figure 1 soit complété pour permettre un déplacement contrôlé du palpeur, suivant une direction perpendiculaire au plan P, au moyen d'un moteur supplémentaire ou analogue, non représenté. Cette condition est automatiquement réalisée lorsque le système de déplacement X-Y-Z est constitué à partir d'une machine-outil à commande numérique, comme mentionné plus haut. Le palpeur et (plus tard) l'outil d'usinage sont supposés cylindriques avec une extrémité hémisphérique. La figure 5 illustre une surface tri-dimensionnelle $S_0$ définissant le lieu géométrique du centre de l'extrémité du palpeur supposé être en contact permanent avec l'objet-modèle (non représenté). Les contours $K_{21}$, $K_{22}$, $K_{23}$... définissent donc des plans parallèles décalés verticalement par exemple, et dans lesquels le centre de l'extrémité du palpeur a évolué successivement pour identifier le contour de l'objet au voisinage de ces plans. La détermination automatique de la cote du contour suivant $K_{24}$ suppose que les pôles des trois contours précédents aient été déterminés. Par conséquent, l'utilisation du processus suppose que la variation inter-plan des trois premiers contours ait été choisie convenablement par l'opérateur. Celui-ci choisira, de préférence, des plans relativement rapprochés. Le calcul de la variation de cote (direction Z) pour passer du troisième contour $K_{23}$ au contour $K_{24}$ suivant (ou, plus généralement, pour passer du contour $K_{2i}$ au contour $K_{2(i+1)}$ ) se fera donc lorsque les pôles des trois contours successifs précédents auront été déterminés ou, au plus tôt, en même temps que la détermination des pôles du troisième contour $K_{23}$. La figure 6 représente une vue en plan, suivant X-Y de la surface de la figure 5. Il est clair que si le centre de l'outil, au lieu de se déplacer sur toute la surface $S_0$ par des changements de niveau infinitésimaux, ne se déplace que dans les plans des contours $K_{21}$, $K_{22}$, $K_{2i}$, la surface de l'objet reproduit par cet outil ne présentera pas un aspect lisse, mais sera formée d'une succession de sillons parallèles. Soit $P_3$, un pôle du contour $K_{23}$, la courbe $D_0$ passant par $P_3$ et perpendiculaire à toutes les intersections de la surface $S_0$ par des plans horizontaux, coupe le contour $K_{22}$ en $P_2$ et le contour $K_{21}$ en $P_1$. Dans l'exemple représenté, où les plans sont horizontaux, ce qui correspond à une succession de contournages de l'objet-modèle, $D_0$ correspond à une ligne de plus grande pente de la surface $S_0$ et si les trois contours précités sont peu éloignés, $D_0$ est une droite. Soit $V_0$ le plan vertical passant par $D_0$. Dans la pratique, on sélectionne pour chaque plan $V_0$ les trois pôles $P_1$, $P_2$ et $P_3$ des contours respectifs $K_{21}$, $K_{22}$ et $K_{23}$ situés au plus près dudit plan. La figure 7 illustre deux positions du palpeur 12 pour lesquelles le centre de son extrémité est placé dans le plan $V_0$ en $P_1$ et $P_2$, respectivement. Autrement dit, le palpeur est supposé en contact avec l'objet-modèle 13 sur les contours $K_{21}$ et $K_{22}$, respectivement, dans le plan $V_0$. Soit $\Sigma_1$ le profil de l'objet-modèle 13 dans le plan vertical $V_0$ et $\Sigma$ la trajectoire du centre de l'extrémité hémisphérique du palpeur pour passer du pôle $P_1$ au pôle $P_2$, dans le plan $V_0$, en supposant qu'un contact permanent est établi entre le palpeur et la surface de l'objet 13 en suivant le trajet $\Sigma_1$. Les pôles sélectionnés $P_1$, $P_2$ et $P_3$ sont sur la courbe $\Sigma$. Les deux sphères centrées en $P_1$ et $P_2$ (représentant l'extrémité du palpeur lorsque celle-ci est située aux deux pôles $P_1$ et $P_2$) se coupent suivant un cercle de diamètre $A_0$ $B_0$ et la crête $\varepsilon$ qui serait laissée au cours de l'usinage entre les premier et second contours $K_{21}$ et $K_{22}$, est représentée par la distance $A_0$ $C_0$, $C_0$ étant l'intersection de la prolongation du diamètre $A_0$ $B_0$ avec l'objet-modèle 13, c'est-à-dire avec la courbe $\Sigma_1$. On peut démontrer que cette crête se détermine par la formule approchée suivante :

$$\varepsilon = \frac{(P_1 \, P_2)^2}{8} \left[ \frac{1}{Rm} + \frac{1}{Rp} \right] \qquad (1)$$

où Rp est le rayon du palpeur Rm est le rayon de courbure de la courbe $\Sigma$ au voisinage des pôles $P_1$ et $P_2$.

Rp est donc connu et, dans la pratique, Rm peut aisément être déterminé en première approximation comme étant le rayon du cercle passant par les pôles $P_1$, $P_2$ et $P_3$ sélectionnés dans le plan $V_0$ (ou au plus près de celui-ci). Comme précédemment décrit en référence à la figure 3, il suffit donc de déterminer les équations des deux médiatrices des segments $P_1$ $P_2$ et $P_2$ $P_3$ pour obtenir à leur intersection les coordonnées du centre $0_1$ du cercle passant par les pôles $P_1$, $P_2$ et $P_3$

Par ailleurs, sachant que la grandeur de la crête $\varepsilon$ est proportionnelle au carré d'un incrément oblique (c'est-à-dire un déplacement du palpeur le long du cercle passant par $P_1$, $P_2$ et $P_3$) il est possible, à partir du pôle $P_3$ d'anticiper la position d'un point d'un futur contour possible $(K_{24})$ en déterminant les coordonnées d'un pôle possible $P_4$ sur ce cercle, au-delà de $P_3$ et telles que :

$$P_3 \, P_4 = P_2 \, P_3 \sqrt{\frac{\varepsilon_0}{\varepsilon}} \qquad (2)$$

où $P_2$ $P_3$ est la distance séparant les deux pôles $P_2$ et $P_3$ connus

$P_3$ $P_4$ est la distance du pôle possible $P_4$ recherché au troisième pôle $P_3$ connu

$\varepsilon$ est la crête connue par la formule (1) entre les contours $K_{21}$ et $K_{22}$

$\varepsilon_0$ est la limite supérieure tolérable de la crête, choisie par l'opérateur.

C'est ce qu'illustre la figure 8.

On parle de "pôle possible", car il n'est pas suffisant de réaliser les opérations qui viennent d'être décrites dans le seul plan $V_0$ choisi arbitrairement, pour obtenir un point de départ convenable du futur contour $K_{24}$. On recommence au contraire ces opérations pour un certain nombre de plans verticaux régulièrement répartis tout autour de la surface $S_0$ (on peut ainsi au maximum traiter autant de plans verticaux que de pôles du contour $K_{23}$) et on calcule à chaque fois l'incrément oblique sur le cercle correspondant passant par les trois pôles sélectionnés dans ce plan. A chaque fois qu'un incrément oblique est déterminé, c'est-à-dire que les coordonnées du quatrième pôle possible sont connues, il est immédiat de déduire la variation de cote correspondante $\Delta Z$ suivant la direction normale à tous les plans parallèles des contours $K_2$ et de déplacer l'extrémité du palpeur de la plus petite valeur $\Delta Z$ trouvée (pour l'ensemble des plans analogues à $V_0$) suivant ladite direction, c'est-à-dire suivant Z dans l'exemple représenté, avant de commencer effectivement le palpage du nouveau contour $K_{24}$. On est ainsi assuré que la valeur de crête $\varepsilon$ laissée entre la nouvelle trajectoire correspondante de l'outil et la précédente sera en tous points inférieure à la valeur $\varepsilon_0$ choisie au départ.

Bien entendu, ce qui vient d'être décrit correspond à la détermination automatique de la cote suivant Z du quatrième contour connaissant les pôles des trois premiers (fixés par l'opérateur) mais il est bien clair que ce processus est renouvelé de la même façon pour déterminer la cote suivant Z du nième contour, connaissant les pôles des trois précédents, la variation de cote pour passer d'un contour à un autre s'effectuant toujours dans le même sens.

Le processus qui vient d'être décrit peut être notablement simplifié, dans le cas notamment où le rayon de courbure Rm le long du troisième contour $K_{23}$ varie peu. Les deux premières opérations décrites ci-dessus, à savoir la sélection de trois pôles situés sensiblement dans chaque plan $V_0$ et la détermination de la valeur de crête $\varepsilon$ correspondante (formule (1) ) ne changent pas. En revanche, dès que cette valeur de crête est connue pour un plan $V_0$ donné, on change de plan et on recommence le calcul de la valeur de crête. On choisit enfin la sélection et le plan vertical pour laquelle la valeur de crête calculée, $\varepsilon$, est la plus grande et on extrapole directement du pôle $P_3$ correspondant les coordonnées d'un point (réel et certain) du futur contour, au-delà de

ce pôle $P_3$. L'extrapolation se fait encore sur le cercle passant par les pôles $P_1$, $P_2$ et $P_3$, donnant la plus grande crête entre $P_1$ et $P_2$. Puis, comme précédemment, on déplace le palpeur d'une valeur $\Delta Z$ correspondant à la variation de cote entre le pôle $P_3$ et le point $P_4$ du futur contour $K_{24}$, le point $P_4$ servant alors de pôle de départ pour le palpage de ce nouveau contour. Cette façon de procéder est plus rapide, puisqu'elle ne nécessite qu'une seule extrapolation. Dans un même ordre d'idée, il est possible d'extrapoler $P_4$ à partir de $P_3$, non pas sur le cercle passant par $P_1$, $P_2$ et $P_3$, mais sur la droite $P_2$ $P_3$.

D'autre part, on a montré des changements de plan verticaux et le palpage des contours suivant des plans horizontaux (contournage) mais il est clair que l'inverse est possible, c'est-à-dire une succession de palpages dans des plans verticaux (balayages), les contours successifs étant alors des contours ouverts.

REVENDICATIONS

1. Procédé de saisie de données représentatives de la forme d'un objet, notamment en vue de la détermination de la trajectoire d'un outil pour la reproduction dudit objet, consistant à mémoriser une succession de coordonnées représentatives d'une succession de points de contact entre un palpeur (12) et ledit objet (13), ces coordonnées définissant des pôles (A, B, G, J ...) et étant déterminées dans un plan par rapport à un système de repérage de référence, caractérisé en ce qu'on associe à une succession donnée de pôles, une succession d'arcs de cercle dont les rayons sont voisins de rayons de courbures de portions successives d'une courbe dudit plan représentant la trajectoire dudit palpeur supposé en contact permanent avec ledit objet.

2. Procédé selon la revendication 1, caractérisé en ce qu'on mémorise les paramètres des arcs de cercle précités (O', O'A) et les coordonnées desdits pôles (A, D, G, J, M ...).

3. Procédé selon la revendication 1, caractérisé en ce qu'on ne mémorise que les coordonnées desdits pôles (A, D, G, J, M ...) et qu'on calcule ultérieurement les paramètres des arcs de cercle correspondants, par exemple au cours d'une relecture des informations mémorisées.

4. Procédé selon l'une des revendications 1 à 3, caractérisé en ce qu'on associe à l'intervalle de deux pôles successifs (DG) la portion du cercle passant par ces deux pôles et le pôle précédent (ADG) ou suivant (DGJ).

5. Procédé selon l'une des revendications 1 à 3, caractérisé en ce qu'on associe à l'intervalle de deux pôles successifs (DG) la portion du cercle passant par ces deux pôles et ayant pour rayon la demi-somme des rayons du cercle passant par ces deux pôles et le pôle précédent (ADG) et du cercle passant par ces deux pôles et le pôle suivant (DGJ).

6. Procédé selon l'une des revendications 1 à 3, caractérisé en ce qu'on associe à l'intervalle de deux pôles non consécutifs (AM) la portion du cercle passant par ces deux pôles et un autre pôle situé entre eux.

7. Procédé selon l'une des revendications précédentes, comportant un palpage au moyen d'un palpeur flexible (12) et/ou retractable et dont une extrémité se trouve dans un plan, la position variable dudit palpeur ou dudit objet étant déterminée par rapport audit système de repérage de référence, du type dans lequel ledit palpeur ou ledit objet est assujetti à se déplacer sensiblement suivant des segments de droite dudit plan, en recherchant des positions (A, D, G ...) pour lesquelles ledit palpeur et ledit objet entrent en contact, caractérisé en ce que, pour au moins certaines phases de la progression dudit palpeur ou dudit objet et après chaque contact, on réalise le cycle suivant consistant à :

- éloigner ledit palpeur dudit objet (DE, GH, ...) suivant une direction perpendiculaire au segment de droite (AD, DG ...) joignant les deux pôles précédents,

- déplacer ledit palpeur ou ledit objet (EF, HI, ...) après lui avoir donné un premier changement d'orientation de $-\frac{\pi}{2}$ (respectivement $+\frac{\pi}{2}$), (ce déplacement étant appelé avance tangentielle),

- déplacer ledit palpeur ou ledit objet (FG, IJ ...) après lui avoir donné un second changement d'orientation de $-\frac{\pi}{2}$ (respectivement $+\frac{\pi}{2}$), jusqu'à rechercher un nouveau contact éventuel, et

- prendre en compte au moins provisoirement les coordonnées d'un nouveau pôle (G, J) dans ledit système de repérage de référence.

8. Procédé selon la revendication 7, caractérisé en ce que les deux premiers déplacements cités du cycle précité sont des distances prédéterminées.

9. Procédé selon la revendication 7 ou 8, caractérisé en ce qu'il consiste, à chaque cycle précité :

- à comparer l'amplitude du déplacement après ledit second changement d'orientation (FG, IJ ...) à l'amplitude de ladite avance tangentielle tant que le contact entre ledit palpeur et ledit objet ne se produit pas,

- à donner un troisième changement d'orientation de $-\frac{\pi}{2}$ (respectivement $+\frac{\pi}{2}$) audit palpeur ou audit objet lorsque le rapport entre ces deux amplitudes atteint une valeur prédéterminée, et

- à déplacer ledit palpeur ou ledit objet dans cette direction jusqu'à détermination d'un nouveau pôle (fig. 5).

10. Procédé selon l'une des revendications 6 à 9, caractérisé en ce que :

- on prend en compte provisoirement une succession de pôles (A, D, G, J ...),

- on sélectionne trois pôles non consécutifs (A, G, M) à partir d'un pôle de départ (A),

- on calcule les paramètres du cercle ($K_3$) passant par ces trois pôles,

- on vérifie si la distance entre l'arc de ce cercle passant par lesdits trois pôles sélectionnés et chacun des pôles intermédiaires (D, J) compris entre ledit pôle de départ et le troisième pôle (M) sélectionné est inférieure à une valeur de précision choisie,

- on sélectionne, dans l'affirmative, trois autres pôles non consécutifs (A, J, S) plus éloignés les uns des autres tout en conservant ledit pôle de départ et on recommence les deux opérations précédentes un certain nombre de fois jusqu'à ce que la distance d'au moins 1'un desdits pôles intermédiaires au cercle calculé en dernier lieu dépasse ladite valeur de précision choisie,

- on élimine alors définitivement les pôles intermédiaires compris entre ledit pôle de départ et ledit troisième pôle sélectionné de 1'avant-dernière sélection et on prend ce troisième pôle sélectionné comme nouveau pôle de départ.

11. Procédé selon la revendication 10, caractérisé en ce que les sélections successives des trois pôles (A, G, M) à partir d'un pôle de départ précité (A) définissent une progression arithmétique.

12. Procédé selon la revendication 10, caractérisé en ce que les sélections successives des trois pôles à partir d'un pôle de départ précité définissent une progression géométrique.

13. Procédé selon 1'une des revendications 10 à 12, caractérisé en ce que les paramètres d'un cercle passant par trois pôles étant les coordonnées de son centre et son rayon, lesdites coordonnées du centre sont obtenues en déterminant les équations des deux médiatrices (M1, M2) des deux cordes (AG, GM) menées entre chaque pôle extrême sélectionné et le pôle médian sélectionné et en déterminant les coordonnées du point d'intersection (O')de ces deux médiatrices, et en ce que ledit rayon est déterminé par la distance entre ce point (O') et 1'un quelconque desdits pôles.

14. Procédé selon la revendication 13, caractérisé en ce qu'on détermine la distance d'un pôle intermédiaire (D ou J) donnée audit arc de cercle en calculant la différence entre la distance de ce pôle audit centre (O') et ledit rayon (O'A).

15. Procédé selon 1'une des revendications précédentes par palpage au moyen d'un palpeur à extrémité arrondie évoluant dans plusieurs plans successifs parallèles décalés selon une direction dudit système de repérage de référence, pour déterminer plusieurs séries de pôles appartenant à des contours distincts dudit objet, caractérisé en ce qu'il consiste, après avoir déterminé les pôles de trois contours successifs voisins ($K_{21}$, $K_{22}$, $K_{23}$) ou en déterminant ceux du troisième contour,
- à sélectionner trois pôles($P_1$, $P_2$, $P_3$) situés sensiblement dans un même plan normal ($V_0$) aux trois contours et appartenant respecti-

18    0077243

vement à ceux-ci;

— à déterminer la valeur de la crête ($A_0$ $C_0$) qui serait laissée par un outil supposé identique audit palpeur entre les premier et second contours dans ledit plan normal ($V_0$),

— à extrapoler les coordonnées d'un point d'un futur contour possible au-delà dudit troisième contour,

— à recommencer les trois opérations précédentes pour plusieurs sélections correspondant à des plans différents et à déplacer ledit palpeur suivant ladite direction (Z) dudit système de repérage de référence d'une valeur ($\Delta Z$) correspondant à la plus faible variation de cote suivant cette direction entre un pôle du troisième contour et le point correspondant d'un futur contour possible précité, pour procéder au palpage du contour suivant.

16. Procédé selon l'une des revendications 1 à 14, par palpage au moyen d'un palpeur à extrémité arrondie évoluant dans plusieurs plans successifs parallèles décalés selon une direction dudit système de repérage de référence, pour déterminer plusieurs séries de pôles appartenant à des contours distincts dudit objet, caractérisé en ce qu'il consiste, après avoir déterminé les pôles de trois contours successifs ($K_{21}$, $K_{22}$, $K_{23}$) voisins ou en déterminant ceux du troisième contour, ($K_{23}$),

— à sélectionner trois pôles ($P_1$, $P_2$, $P_3$) situés sensiblement dans un même plan normal aux trois contours et appartenant respectivement à ceux-ci,

— à déterminer la valeur de la crête qui serait laissée par un outil supposé identique audit palpeur entre les premier et second contours dans ledit plan normal ($V_0$),

— à recommencer les deux opérations précédentes pour plusieurs sélections correspondant à des plans différents,

— à choisir la sélection pour laquelle ladite valeur de crête est la plus grande,

— à extrapoler les coordonnées d'un point du futur contour au-delà du pôle dudit troisième contour pour lequel la valeur de crête est la plus grande et,

— à déplacer ledit palpeur suivant la direction dudit système de repérage de référence d'une valeur correspondant à la variation de cote ($\Delta Z$) suivant cette direction entre le pôle sélectionné dudit troisième contour et ledit point dudit futur contour, pour procéder au palpage de ce dernier.

17. Procédé selon la revendication 15 ou 16, utilisant un palpeur à extrémité hémisphérique, caractérisé en ce que ladite crête $\varepsilon$ est à chaque fois déterminée par la formule :

$$\varepsilon = \frac{(P_1 P_2)^2}{8} \left[ \frac{1}{Rm} + \frac{1}{Rp} \right]$$

où $\varepsilon$ est la valeur de crête recherchée

$P_1 P_2$ est la distance séparant les pôles sélectionnés des deux premiers contours

Rm est le rayon du cercle passant par les trois pôles sélectionnés

Rp est le rayon de l'extrémité hémisphérique dudit palpeur.

18. Procédé selon l'une des revendications 15 à 17, caractérisé en ce que ladite extrapolation est à chaque fois déterminée au-delà du pôle dudit troisième contour sur le cercle passant par les trois pôles sélectionnés en appliquant la formule :

$$P_3 P_4 = P_2 P_3 \sqrt{\frac{\varepsilon_0}{\varepsilon}}$$

où $P_3 P_4$ est la distance séparant ledit troisième pôle dudit point d'un futur contour possible correspondant,

$P_2 P_3$ est la distance séparant les second et troisième pôles sélectionnés,

$\varepsilon$ est la valeur de crête précités

$\varepsilon_0$ est une valeur de crête limite admissible, prédéterminée.

FIG.1

FIG.4

0077243

1,4

FIG.2

FIG.3

2,4

0077243

# FIG.5

# FIG.6

FIG.7

FIG.8

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 05 B 19/42 |
| Y | DE-A-1 563 503 (LICENTIA) *En entier* | 1 | |
| | --- | | |
| Y | FR-A-2 061 306 (BENDIX) *En entier* | 1-6,10 ,13,14 | |
| | --- | | |
| Y | FR-A-1 557 915 (SIEMENS) *En entier* | 1-6,10 ,13,14 | |
| | --- | | |
| Y | GB-A-1 233 135 (SIEMENS) *En entier* | 1-6,10 ,13,14 | |
| | --- | | |
| A | FR-A-1 494 945 (G.DUFOUR) *En entier* | 1,7-9 | DOMAINES TECHNIQUES RECHERCHES (Int. Cl. ³) |
| | --- | | G 05 B |
| A | DE-A-1 060 968 (VEB FRÄSMASCHINENWERK LEIPZIG) *En entier* | 7 | B 23 Q |
| | --- | | |
| E,P | EP-A-0 041 808 (THE BRITISH UNITED SHOE MACHINERY) *En entier* | 1-10 | |
| | ----- | | |

Le présent rapport de recherche a été établi pour toutes les revendications

| Lieu de la recherche | Date d'achèvement de la recherche | Examinateur |
|---|---|---|
| LA HAYE | 24-01-1983 | CORNILLIE O.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82